# EUROPEAN PATENT SPECIFICATION

(11) **EP 4 147 776 B1**
(45) Date of publication and mention of the grant of the patent: **04.06.2025**
(21) Application number: 21799463.1
(22) Date of filing: 21.04.2021
(51) Int. Cl.: B01J 27/24, H01M 10/54, H01M 4/90, B01J 23/745, B01J 21/18, H01M 4/133, H01M 4/1393, H01M 4/66, H01M 4/88, H01M 4/92, H01M 4/96, H01M 4/587, B01J 37/00, B01J 37/08

(54) **OXYGEN REDUCTION CATALYST EMPLOYING GRAPHITE OF NEGATIVE ELECTRODE OF WASTE BATTERY, AND PREPARATION METHOD THEREFOR**
SAUERSTOFFREDUKTIONSKATALYSATOR MIT GRAPHIT EINER NEGATIVELEKTRODE EINER ABFALLBATTERIE UND HERSTELLUNGSVERFAHREN DAFÜR
CATALYSEUR DE RÉDUCTION D'OXYGÈNE UTILISANT DU GRAPHITE D'ÉLECTRODE NÉGATIVE DE BATTERIE USAGÉE, ET SON PROCÉDÉ DE PRÉPARATION

(30) Priority: 07.05.2020 CN 202010376942
(43) Date of publication of application: 15.03.2023
(73) Proprietor: Guangdong Brunp Recycling Technology Co., Ltd, Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: ZOU, Ke, Foshan, Guangdong 528137 (CN); RUAN, Dingshan, Foshan, Guangdong 528137 (CN); LI, Changdong, Foshan, Guangdong 528137 (CN); WANG, Yuan, Foshan, Guangdong 528137 (CN); WANG, Fengmei, Foshan, Guangdong 528137 (CN); WU, Lin, Foshan, Guangdong 528137 (CN)
(74) Representative: Ricker, Mathias
(86) International application number: PCT/CN2021/088764
(87) International publication number: WO 2021/223597

(56) References cited:
- WO-A1-2017/117410
- CN-A- 105 356 001
- CN-A- 105 552 468
- CN-A- 105 552 468
- CN-A- 106 129 522
- CN-A- 106 785 161
- CN-A- 106 785 163
- CN-A- 109 279 600
- CN-A- 109 888 318
- CN-A- 111 644 189

## Description

### TECHNICAL FIELD

The present application belongs to the field of catalysts, and particularly relates to an oxygen reduction catalyst using graphite from waste battery negative electrodes and a preparation method therefor.

### BACKGROUND

With the transformation and development of energy, the output of lithium-ion batteries is increasing day by day, and the waste lithium-ion batteries will gradually increase. The waste lithium-ion batteries have harmful impurities which can pollute the environment, and also have many valuable resources and materials, so that it is urgent to recycle and utilize the waste lithium-ion batteries.

At present, some researches have been reported on recycling waste lithium-ion battery positive electrode materials, which mainly adopt hydrometallurgy, pyrometallurgy and other methods to recycle the valuable metals. However, negative electrode materials also have great recycling value. Graphite has good structural ductility at molecular and morphological level, and strong tolerance to acid and base media, so it is a promising catalytic material.

The CN 105,552,468 A discloses a recycling method for graphite anode material from waste lithium-ion battery.

The CN 106,129,522 A discloses a preparation method for recycling graphite by negative electrodes of lithium-ion batteries.

The CN 105,356,001 A discloses a method for repairing and modifying negative electrode waste of waste lithium-ion batteries.

The CN 106,785,161 A discloses an environmental regeneration method for graphite negative electrode.

Then CN 106,785,163 A discloses a method for repairing and regenerating graphite negative electrode materials for lithium-ion batteries.

However, at present, graphite is usually directly activated and repaired to be continually used as graphite negative electrodes. More and more people realize that it is urgent to prepare useful materials in batteries using waste graphite as a raw material.

Therefore, it is urgent to provide an oxygen reduction catalyst using graphite from waste battery negative electrodes, which has waste graphite as a raw material, simple preparation method, low cost and good economic benefits.

### SUMMARY

The present application is to provide an oxygen reduction catalyst using graphite from waste battery negative electrodes, a preparation method therefor and use thereof. The present application adopts graphite particles generated in the recycling process of waste lithium-ion batteries as a raw material, which reduces the cost of catalyst preparation, recycles the resources, reduces environmental pollution, and has both social and economic benefits.

The problem of the present invention is solved by a preparation method for an oxygen reduction catalyst according to the independent claim 1 as well as by an oxygen reduction catalyst according to the independent claim 8 as well as by a fuel cell according to the independent claim 9. The dependent claims to further advantageous developments of the present invention.

In order to achieve the object, the present application adopts the technical solutions below.

A preparation method for an oxygen reduction catalyst using graphite from waste battery negative electrodes, including the following steps:
(1) collecting graphite particles from waste batteries, and then performing heat treatment on the graphite particles;
(2) ball-milling the graphite particles after heat treatment, an iron salt and a nitrogenous organic compound to obtain a catalyst precursor;
(3) performing carbonization treatment on the catalyst precursor in an inert atmosphere to obtain a carbon-based mixture containing iron and nitrogen; and
(4) dissolving the carbon-based mixture containing iron and nitrogen in an acid solution, filtering and drying the same, and performing carbonization treatment in an inert atmosphere again to obtain the oxygen reduction catalyst using graphite from waste battery negative electrodes.

Preferably, the graphite particles in step (1) are prepared by drying, crushing and sieving the waste graphite negative electrodes, and then removing the large particle impurities in the negative electrodes.

More preferably, the drying has a temperature of 50 to 120 °C and a drying time of 2 to 12 h, and the sieving is carried out with a 100 to 400 mesh standard sieve.

Preferably, the heat treatment in step (1) has a temperature of 300 to 600 °C, a heating rate of 1 to 10 °C/min, and a time of 0.5 to 3 h.

Preferably, the iron salt in step (2) is one of ferric chloride, ferric nitrate or ferric sulfate. Preferably, the nitrogenous organic compound in step (2) is at least one of melamine, aniline or urea.

Preferably, the graphite particles, the iron salt and the nitrogenous organic compound in step (2) have a mass ratio of 1:(1-5):(1-5).

Preferably, the ball milling in step (2) has a rate of 200 to 600 rpm and a time of 1 to 5 h. Preferably, the inert gas in step (3) and step (4) is N₂ or Ar.

Preferably, the carbonization treatment in step (3) and step (4) has a temperature of 600 to 1100 °C, a heating rate of 1 to 10 °C/min, and a carbonization time of 1 to 5 h.

Preferably, the acid solution in step (4) is one of sulfuric acid, hydrochloric acid or nitric acid, and the acid solution has a concentration of 0.5 to 3 mol/L.

Preferably, the drying in step (4) has a temperature of 50 to 100 °C and a drying time of 2 to 24 h.

An oxygen reduction catalyst using graphite from waste battery negative electrodes is provided, which is prepared by the preparation method; wherein the oxygen reduction catalyst using graphite from waste battery negative electrodes includes graphite with pores and loose structure, a transition metal inside the graphite and a nitrogen source on the graphite surface; the transition metal is at least one of Fe, Co, Mn or Ni.

Preferably, the oxygen reduction catalyst using graphite from waste battery negative electrodes has a surface area of 517.13 to 700 m²·g⁻¹, and a particle size of 4 to 22 µm.

A fuel cell is provided, which includes the oxygen reduction catalyst using graphite from waste battery negative electrodes.

### Beneficial effects

(1) The present application adopts graphite particles generated in the recycling process of waste lithium-ion batteries as a raw material, which has wide sources and low cost, and can reduce environmental pollution and have good economic benefits.
(2) The present application has simple preparation process, convenient operation, and high product value, and can be applied to mass production of fuel cells.
(3) The oxygen reduction catalyst using graphite from waste battery negative electrodes prepared in the present application has very high catalytic activity. The present application creatively adopts waste graphite negative electrodes as a raw material, and the waste graphite contains a small amount of battery plastic, separators, organic impurities and metal impurities; in the preparing process of the oxygen reduction catalyst using graphite from waste battery negative electrodes, after removing plastic, separators and organic impurities, the remaining metal impurities are transition metals with catalytic activity, such as Fe, Co, Mn and Ni, which can improve the catalytic performance of the catalyst; the carbonization treatment allows the nitrogen and metal doped in the catalyst precursor uniformly loaded on the carbon carrier, so that the catalyst can possess catalytic activity; with the acid treatment, the components without oxygen reduction activity can be effectively removed from the product, and the subsequent carbonization treatment can repair the active sites and improve the activity of the catalyst; thus, the oxygen reduction catalyst using graphite from waste battery negative electrodes has an initial potential of 0.85 to 0.90 V(vs. RHE), a half-wave potential of 0.65 to 0.83 V(vs. RHE), and a limiting current density of 4.52 to 6.42 mA/cm², which has the comparable catalytic performance of the Pt/C catalyst.

### BRIEF DESCRIPTION OF DRAWINGS

FIG. 1 is an SEM image of the oxygen reduction catalyst using graphite from waste battery negative electrodes in Example 1 of the present application;
FIG. 2 is a high-resolution XPS spectrum of N1s of the oxygen reduction catalyst using graphite from waste battery negative electrodes in Example 1 of the present application;
FIG. 3 is polarization curves of the oxygen reduction catalyst using graphite from waste battery negative electrodes in Example 1 of the present application in 0.1 M KOH solution saturated with oxygen at different rotating speeds;
FIG. 4 is cyclic voltammetric curves of the oxygen reduction catalyst using graphite from waste battery negative electrodes in Example 1 of the present application in 0.1 M KOH solution saturated with oxygen.
FIG. 5 is oxygen reduction polarization curves of the catalysts prepared in Example 1 and Comparative Example 1 of the present application in 0.1 M KOH solution saturated with oxygen.

### DETAILED DESCRIPTION

In order to make the technical solutions of the present application more clear to those skilled in the art, the embodiments below are described for explanation. It should be noted that the embodiments below have no limitation on the protection scope claimed by the present application. Unless otherwise specified, the raw materials, reagents or devices used in the embodiments below can be obtained from conventional commercial channels, or can be obtained by the existing methods.

### Example 1

In this example, a preparation method for an oxygen reduction catalyst using graphite from waste battery negative electrodes includes the following specific steps:
(1) the collected waste graphite negative electrodes were dried at 65 °C for 6 h, crushed and sieved with a 300-mesh sieve, and large particle impurities in the negative electrodes were removed to obtain negative electrode graphite particles;
(2) the graphite particles was subjected to heat treatment at 400 °C for 2 h with a heating rate of 3°C/min in an air atmosphere to remove the organic impurities in the graphite particles;
(3) 4 g of the treated graphite particles, 5 g of Fe₂(SO₄)₃ and 5 g of melamine were ball-milled and mixed at a ball milling rate of 350 rpm for 2 h to obtain a uniformly mixed catalyst precursor;
(4) the catalyst precursor was subjected to carbonization treatment at 900 °C for 2 h with a heating rate of 5°C/min in a N₂ atmosphere to obtain a carbon-based mixture containing iron and nitrogen; and
(5) the carbon-based mixture containing iron and nitrogen was dissolved in 2 mol/L H₂SO₄ solution, filtered, dried at 65 °C for 12 h, and subjected to carbonization treatment at 900 °C for 2 h in a N₂ atmosphere to obtain the oxygen reduction catalyst using graphite from waste battery negative electrodes.

### Example 2

In this example, a preparation method for an oxygen reduction catalyst using graphite from waste battery negative electrodes includes the following steps:
(1) the collected waste graphite negative electrodes were dried at 80 °C for 4 h, crushed and sieved with a 400-mesh sieve, and large particle impurities in the negative electrodes were removed to obtain negative electrode graphite particles;
(2) the graphite particles were subjected to heat treatment at 350 °C for 3 h with a heating rate of 2 °C/min in an air atmosphere to remove the organic impurities in the graphite particles;
(3) 4 g of the treated graphite particles, 4 g of FeCl₃·6H₂O and 4 g of melamine were ball-milled and mixed at a ball milling rate of 350 rpm for 2 h to obtain a uniformly mixed catalyst precursor;
(4) the catalyst precursor was subjected to carbonization treatment at 800 °C for 3 h with a heating rate of 5 °C/min in a N₂ atmosphere to obtain a carbon-based mixture containing iron and nitrogen; and
(5) the carbon-based mixture containing iron and nitrogen was dissolved in 2.5 mol/L HCl solution, filtered, dried at 80 °C for 8 h, and subjected to carbonization treatment at 800 °C for 3 h in a N₂ atmosphere to obtain the oxygen reduction catalyst using graphite from waste battery negative electrodes.

### Example 3

In this example, a preparation method for an oxygen reduction catalyst using graphite from waste battery negative electrodes includes the following steps:
(1) the collected waste graphite negative electrodes were dried at 70 °C for 3 h, crushed and sieved with a 200-mesh sieve, and large particle impurities in the negative electrodes were removed to obtain graphite particles;
(2) the graphite particles were subjected to heat treatment at 480 °C for 2.5 h with a heating rate of 2 °C/min in an air atmosphere to remove the organic impurities in the graphite particles;
(3) 4 g of the treated graphite particles, 8 g of Fe(NO₃)₃·9H₂O and 5 g of melamine were ball-milled and mixed at a ball milling rate of 450 rpm for 2.5 h to obtain a uniformly mixed catalyst precursor;
(4) the catalyst precursor was subjected to carbonization treatment at 1000 °C for 1 h with a heating rate of 3 °C/min in an Ar atmosphere to obtain a carbon-based mixture containing iron and nitrogen; and
(5) the carbon-based mixture containing iron and nitrogen was dissolved in 1.5 mol/L HNO₃ solution, filtered, dried at 70 °C for 10 h, and subjected to carbonization treatment at 1000 °C for 1 h in an Ar atmosphere to obtain the oxygen reduction catalyst using graphite from waste battery negative electrodes.

### Example 4

In this example, a preparation method for an oxygen reduction catalyst using graphite from waste battery negative electrodes includes the following steps:
(1) the collected waste graphite negative electrodes were dried at 120 °C for 2 h, crushed and sieved with a 300-mesh sieve, and large particle impurities in the negative electrodes were removed to obtain graphite particles;
(2) the graphite particles was subjected to heat treatment at 360 °C for 3 h with a heating rate of 2 °C/min in an air atmosphere to remove the organic impurities in the graphite particles;
(3) 4 g of the treated graphite particles, 10 g of FeCl₃·6H₂O and 8 g of melamine were ball-milled and mixed at a ball milling rate of 450 rpm for 2.5 h to obtain a uniformly mixed catalyst precursor;
(4) the catalyst precursor was subjected to carbonization treatment at 1100 °C for 1 h with a heating rate of 3 °C/min in an Ar atmosphere to obtain a carbon-based mixture containing iron and nitrogen; and
(5) the carbon-based mixture containing iron and nitrogen was dissolved in 1.5 mol/L H₂SO₄ solution, filtered, dried at 120 °C for 5 h, and subjected to carbonization treatment at 1100 °C for 1 h in an Ar atmosphere to obtain the oxygen reduction catalyst using graphite from waste battery negative electrodes.

### Example 5

In this example, a preparation method for an oxygen reduction catalyst using graphite from waste battery negative electrodes includes the following steps:
(1) the collected waste graphite negative electrodes were dried at 90 °C for 6 h, crushed and sieved with a 400-mesh sieve, and large particle impurities in the negative electrodes were removed to obtain graphite particles;
(2) the graphite particles were subjected to heat treatment at 450 °C for 4 h with a heating rate of 3 °C/min in an air atmosphere to remove the organic impurities in the graphite particles;
(3) 4 g of the treated graphite particles, 8 g of Fe(NO₃)₃·9H₂O and 6 g of melamine were ball-milled and mixed at a ball milling rate of 400 rpm for 4 h to obtain a uniformly mixed catalyst precursor;
(4) the catalyst precursor was subjected to carbonization treatment at 950 °C for 3 h with a heating rate of 4 °C/min in a N₂ atmosphere to obtain a carbon-based mixture containing iron and nitrogen; and
(5) the carbon-based mixture containing iron and nitrogen was dissolved in 2 mol/L HCl solution, filtered, dried at 90 °C for 10 h, and subj ected to carbonization treatment at 950 °C for 3 h in a N₂ atmosphere to obtain the oxygen reduction catalyst using graphite from waste battery negative electrodes.

### Comparative example 1

A preparation method for an oxygen reduction catalyst using graphite from waste battery negative electrodes includes the following steps:
(1) 4 g of commercial graphite, 5 g of Fe₂(SO₄)₃ and 5 g of melamine were ball-milled and mixed at a ball milling rate of 350 rpm for 2 h to obtain a uniformly mixed catalyst precursor;
(2) the catalyst precursor was subjected to carbonization treatment at 900 °C for 2 h with a heating rate of 5 °C/min in a N₂ atmosphere to obtain a carbon-based mixture containing iron and nitrogen; and
(3) the carbon-based mixture containing iron and nitrogen was dissolved in 2 mol/L H₂SO₄ solution, filtered, dried at 65 °C for 12 h, and subjected to carbonization treatment at 900 °C for 2 h in a N₂ atmosphere to obtain the oxygen reduction catalyst using graphite from waste battery negative electrodes.

### Performance test:

The oxygen reduction catalysts with carbon base of graphite from waste battery negative electrodes prepared in the examples 1 to 6 were tested for their performance according to the methods below.
(1) 6 mg of the catalyst was added into 1 mL of ethanol and Nafion solution with a mass fraction of 5 %, in which ethanol and Nafion had a volume ratio of 9:1, and the mixture was subjected to ultrasonic dispersion for 2 hours. 20 µL of the catalyst solution was transferred with a pipette to a rotating disc electrode of a rotating disc with a diameter of 5 mm, and naturally dried in the air.
(2) Electrochemical test was carried out on P3000A-DX electrochemical workstation, using the above electrode as a working electrode, a platinum wire as a counter electrode and an Ag/AgCl electrode as a reference electrode.
(3) The catalyst was tested at a scan rate of 5 mV·s⁻¹ in 0.1 M KOH solution to obtain the cyclic voltammetric curves in saturated oxygen and the polarization curves at different rotating speeds.

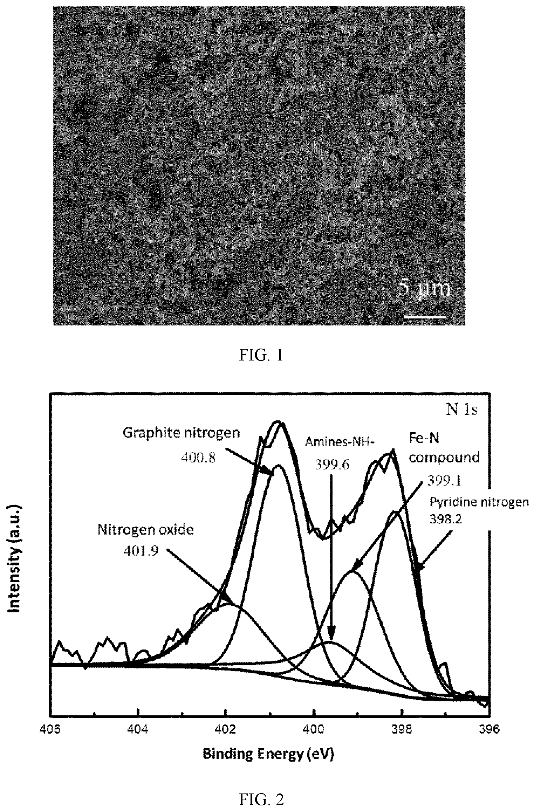

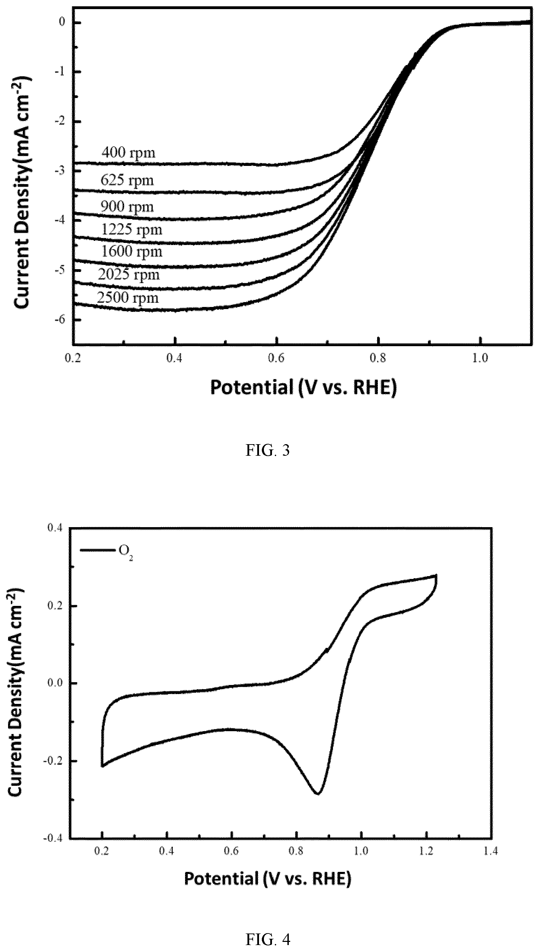

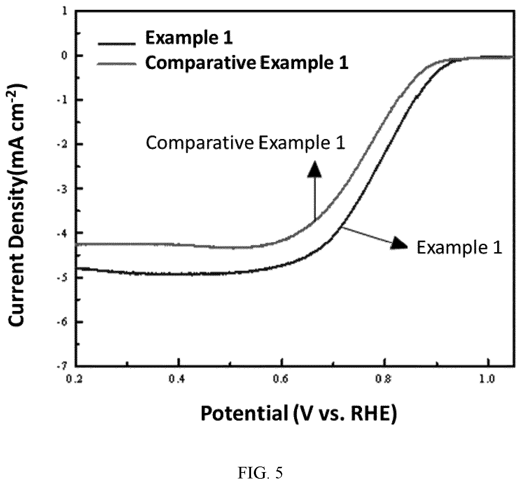

FIG. 1 is the SEM image of the catalyst prepared in Example 1 of the present application, FIG. 2 is the high-resolution XPS spectrum of N1s of the catalyst prepared in Example 1 of the present application, FIG. 3 is the polarization curves of the catalyst prepared in Example 1 of the present application in 0.1 M KOH solution saturated with oxygen at different rotating speeds, FIG. 4 is the cyclic voltammetric curves of the catalyst prepared in Example 1 of the present application in 0.1 M KOH solution saturated with oxygen, and FIG. 5 is the oxygen reduction polarization curves of the catalysts prepared in Example 1 and Comparative Example 1 of the present application in 0.1 M KOH solution saturated with oxygen. It can be seen from FIG. 1 that the catalyst prepared in Example 1 of the present application has loose structure and obvious pores on the catalyst surface; it can be seen from the XPS spectrum of FIG. 2 that the catalyst prepared in Example 1 of the present application contains high content of pyridine nitrogen and graphite nitrogen; according to the calculation based on Koutecky-Levich equation, the catalyst prepared in Example 1 of the present application reacts by four-electron transfer mechanism; it can be seen from FIG. 4 that the cyclic voltammetric curves of the catalyst in Example 1 have obvious oxygen reduction peak, which indicates that the catalyst prepared in Example 1 has good catalytic activity for oxygen reduction; it can be seen from FIG. 5 that the initial potential, half-wave potential and limiting current density of the catalyst prepared in Example 1 are all better than those of the catalyst prepared in Comparative Example 1, and the initial potential can reach 0.90 V vs. RHE and the half-wave potential can reach 0.79 V vs. RHE.

The oxygen reduction catalyst using graphite from waste battery negative electrodes and the preparation method therefor provided by the present application are described in detail hereinabove. In this disclosure, the principle and implementation of the present application are described through embodiments. The embodiments are merely used for a better understanding of the methods and concept in the present application, including the optimal example, and the embodiments also enable those skilled in the art to carry out the present application, including fabricating and using any device or system, and implementing any related method.

## Claims

1. A preparation method for an oxygen reduction catalyst using graphite from waste battery negative electrodes, comprising the following steps:
(1) collecting graphite particles from waste batteries, and then performing heat treatment on the graphite particles;
(2) ball-milling and mixing the treated graphite particles, an iron salt and a nitrogenous organic compound to obtain a catalyst precursor;
(3) performing carbonization treatment on the catalyst precursor in an inert atmosphere to obtain a carbon-based mixture containing iron and nitrogen; and
(4) dissolving the carbon-based mixture containing iron and nitrogen in an acid solution, filtering and drying the same, and performing carbonization treatment in an inert atmosphere again to obtain the oxygen reduction catalyst using graphite from waste battery negative electrodes.

2. The preparation method according to claim 1, wherein the heat treatment in step (1) has a temperature of 300 to 600 °C, a heating rate of 1 to 10 °C/min, and a time of 0.5 to 3 h.

3. The preparation method according to claim 1, wherein the iron salt in step (2) is one of ferric chloride, ferric nitrate or ferric sulfate.

4. The preparation method according to claim 1, wherein the nitrogenous organic compound in step (2) is at least one of melamine, aniline or urea.

5. The preparation method according to claim 1, wherein the graphite particles, the iron salt and the nitrogenous organic compound in step (2) have a mass ratio of 1:(1-5):(1-5).

6. The preparation method according to claim 1, wherein the inert gas in step (3) and step (4) is N₂ or Ar; the carbonization treatment in step (3) has a temperature of 600 to 1100 °C, a heating rate of 1 to 10 °C/min, and a carbonization time of 1 to 5 h.

7. The preparation method according to claim 1, wherein the acid solution in step (4) is one of sulfuric acid, hydrochloric acid or nitric acid, and the acid solution has a concentration of 0.5 to 3 mol/L.

8. An oxygen reduction catalyst using graphite from waste battery negative electrodes, which is prepared by the preparation method according to any one of claims 1 to 7; wherein the oxygen reduction catalyst using graphite from waste battery negative electrodes comprises graphite with pores, a transition metal inside the graphite and a nitrogen source on the graphite surface; the transition metal is at least one of Fe, Co, Mn or Ni.

9. A fuel cell, comprising the oxygen reduction catalyst using graphite from waste battery negative electrodes according to claim 8.

## Patentansprüche

1. Herstellungsverfahren für einen Sauerstoffreduktionskatalysator unter Verwendung von Graphit aus Abfallbatterie-Negativelektroden, umfassend die folgenden Schritte:
(1) Sammeln von Graphitpartikeln aus Abfallbatterien und anschließendes Durchführen einer Wärmebehandlung der Graphitpartikel;
(2) Kugelmahlen und Mischen der behandelten Graphitpartikel, eines Eisensalzes und einer stickstoffhaltigen organischen Verbindung, um eine Katalysatorvorstufe zu erhalten;
(3) Durchführen einer Karbonisierungsbehandlung der Katalysatorvorstufe in einer Inertatmosphäre, um ein kohlenstoffbasiertes Gemisch, das Eisen und Stickstoff enthält, zu erhalten; und
(4) Lösen des kohlenstoffbasierten Gemischs, das Eisen und Stickstoff enthält, in einer Säurelösung, Filtrieren und Trocknen desselben sowie erneutes Durchführen einer Karbonisierungsbehandlung in einer Inertatmosphäre, um den Sauerstoffreduktionskatalysator unter Verwendung von Graphit aus Abfallbatterie-Negativelektroden zu erhalten.

2. Herstellungsverfahren nach Anspruch 1, wobei die Wärmebehandlung in Schritt (1) bei einer Temperatur von 300 bis 600 °C mit einer Aufheizrate von 1 bis 10 °C/min über einen Zeitraum von 0,5 bis 3 h durchgeführt wird.

3. Herstellungsverfahren nach Anspruch 1, wobei das Eisensalz in Schritt (2) Eisen(III)-chlorid, Eisen(III)-nitrat oder Eisen(III)-sulfat ist.

4. Herstellungsverfahren nach Anspruch 1, wobei die stickstoffhaltige organische Verbindung in Schritt (2) mindestens eine Verbindung aus Melamin, Anilin oder Harnstoff ist.

5. Herstellungsverfahren nach Anspruch 1, wobei die Graphitpartikel, das Eisensalz und die stickstoffhaltige organische Verbindung in Schritt (2) in einem Massenverhältnis von 1:(1-5):(1-5) vorliegen.

6. Herstellungsverfahren nach Anspruch 1, wobei das Inertgas in Schritt (3) und Schritt (4) N₂ oder Ar ist; wobei die Karbonisierungsbehandlung in Schritt (3) bei einer Temperatur von 600 bis 1100 °C mit einer Aufheizrate von 1 bis 10 °C/min über einen Karbonisierungszeitraum von 1 bis 5 h durchgeführt wird.

7. Herstellungsverfahren nach Anspruch 1, wobei die Säurelösung in Schritt (4) Schwefelsäure, Salzsäure oder Salpetersäure ist und die Säurelösung eine Konzentration von 0,5 bis 3 mol/L aufweist.

8. Sauerstoffreduktionskatalysator unter Verwendung von Graphit aus Abfallbatterie-Negativelektroden, hergestellt durch das Herstellungsverfahren nach einem der Ansprüche 1 bis 7; wobei der Sauerstoffreduktionskatalysator unter Verwendung von Graphit aus Abfallbatterie-Negativelektroden porösen Graphit, ein Übergangsmetall im Inneren des Graphits und eine Stickstoffquelle auf der Graphitoberfläche umfasst; wobei das Übergangsmetall mindestens eines aus Fe, Co, Mn oder Ni ist.

9. Brennstoffzelle, umfassend den Sauerstoffreduktionskatalysator unter Verwendung von Graphit aus Abfallbatterie-Negativelektroden nach Anspruch 8.

## Revendications

1. Procédé de préparation d'un catalyseur de réduction d'oxygène utilisant un graphite issu d'électrodes négatives de batterie usée, comprenant les étapes suivantes :
(1) collecter des particules de graphite à partir de batteries usées, puis effectuer un traitement thermique sur les particules de graphite ;
(2) effectuer un broyage à billes et mélanger les particules de graphite traitées, un sel de fer et un composé organique azoté pour obtenir un précurseur de catalyseur ;
(3) effectuer un traitement de carbonatation sur le précurseur de catalyseur sous atmosphère inerte pour obtenir un mélange à base de carbone contenant du fer et de l'azote ; et
(4) dissoudre le mélange à base de carbone contenant du fer et de l'azote dans une solution acide, filtrer et sécher, et re-effectuer un traitement de carbonisation sous atmosphère inerte pour obtenir le catalyseur de réduction d'oxygène utilisant un graphite issu d'électrodes négatives de batterie usée.

2. Procédé de préparation selon la revendication 1, dans lequel le traitement thermique à l'étape (1) est effectué à une température de 300 à 600 °C, avec une vitesse de chauffage de 1 à 10 °C/min et une durée de 0,5 à 3 h.

3. Procédé de préparation selon la revendication 1, dans lequel le sel de fer à l'étape (2) est l'un parmi le chlorure ferrique, le nitrate ferrique ou le sulfate ferrique.

4. Procédé de préparation selon la revendication 1, dans lequel le composé organique azoté à l'étape (2) est au moins un parmi la mélamine, l'aniline ou l'urée.

5. Procédé de préparation selon la revendication 1, dans lequel les particules de graphite, le sel de fer et le composé organique azoté à l'étape (2) ont un rapport massique de 1 : (1-5) : (1-5).

6. Procédé de préparation selon la revendication 1, dans lequel l'atmosphère inerte à l'étape (3) et à l'étape (4) est N₂ ou Ar ; le traitement de carbonatation à l'étape (3) est effectué à une température de 600 à 1100 °C, avec une vitesse de chauffage de 1 à 10 °C/min, et une durée de carbonatation de 1 à 5 h.

7. Procédé de préparation selon la revendication 1, dans lequel la solution acide à l'étape (4) est une solution d'acide sulfurique, d'acide chlorhydrique ou d'acide nitrique, et la solution acide a une concentration de 0,5 à 3 mol/L.

8. Catalyseur de réduction d'oxygène utilisant un graphite issu d'électrodes négatives de batterie usée, qui est préparé par le procédé de préparation selon l'une quelconque des revendications 1 à 7 ; dans lequel le catalyseur de réduction d'oxygène utilisant un graphite issu d'électrodes négatives de batterie usée comprend un graphite poreux, un métal de transition à l'intérieur du graphite et une source d'azote à la surface du graphite ; le métal de transition est au moins l'un parmi Fe, Co, Mn ou Ni.

9. Pile à combustible, comprenant le catalyseur de réduction d'oxygène utilisant un graphite issu d'électrodes négatives de batterie usée selon la revendication 8.
